# EUROPEAN PATENT APPLICATION

(11) **EP 3 400 807 A1**
(43) Date of publication of application: **14.11.2018**
(21) Application number: 17170493.5
(22) Date of filing: 10.05.2017
(51) Int. Cl.: A23D 7/00, A23D 7/02, A23D 7/04, A23L 27/00, A23L 27/60

(54) **METHOD OF PRODUCING AN EMULSIFIED FOOD PRODUCT**

(71) Applicant: Tetra Laval Holdings & Finance S.A., 1009 Pully (CH)
(72) Inventor: MORTENSEN, Hans Henrik, DK-9400 Noerresundby (DK); JENSEN, Palle Bach, 9293 Kongerslev (DK); Broberg, Lars, 26392 Jonstorp (SE); Habel, Friedjof, 21509 Glinde (DE)
(74) Representative: Tetra Pak - Patent Attorneys SE

(57) **Abstract**

A method for producing an emulsified food product, the method comprising: introducing (102) oil derived from animals or vegetables, a water based ingredient and an emulsifier ingredient into a tank of a mixer unit; mixing (104), in the mixer unit, the oil, the water based ingredient and the emulsifier ingredient into a pre-emulsion; conveying (106) the pre-emulsion out from the mixer unit to an emulsifier unit; and mixing (108), with the emulsifier unit), the pre-emulsion to thereby obtain the emulsified food product.

## Description

### Technical Field

The invention relates to a method for producing an emulsified food product like mayonnaise, soup, sauce and dressing.

### Background Art

An emulsified food product is a stable emulsion of ingredients that include at least two liquid ingredients that are normally immiscible (unmixable or unblendable). Examples of such food products are different types of mayonnaises, soups, sauces and dressings that are consumed as food by humans. The immiscible liquids in the food product are generally oil (fat) and water.

There is a huge number of different types and variants of emulsified food products. For each food product application, consumer preferences for taste, texture and appearance of the food vary considerably and are highly dependent on traditions, country, region, the ingredients that form the food product. When taking the range of national, regional and even local codes for naming, labelling and ingredient preference into account in respect of a certain emulsified food product, and throw in ever-changing consumer trends, the challenge of providing efficient production of emulsified food products becomes obvious. Being able to accurately predict and control the required parameters for producing the desired emulsified food product of right quality is of utmost importance, as this allows optimization of production costs, trouble free production scale-up and, not least, rapid development and shorter time-to-market for new emulsified food products.

Factors that need to be taken into account include predicting the emulsion of the food product and its droplet-size, as these parameters to a great extent affects texture and appearance. These parameters are influenced not only by ingredient types and composition, but also by the production method and the type of equipment used as well as the scale of production.

Several prior art techniques for producing emulsified food products exist. However, there is a need for an improved method that optimizes emulsified food product production, where the equipment can be used to efficiently produce different kinds of emulsified food products.

### Summary

It is an object of the invention to at least partly improve prior art techniques for producing emulsified food products. In particular, it is an object to provide an emulsified food product production method where different types of emulsified foods are efficiently emulsified, uniform droplet size is provided, overshear (breaking) of the emulsion may be avoided.

Thus, according to a first aspect a method is provided for producing an emulsified food product. The method comprises: introducing oil derived from animals or plants, a water based ingredient and an emulsifier ingredient into a tank of a mixer unit; mixing, in the mixer unit, the oil, the water based ingredient and the emulsifier ingredient into a pre-emulsion; conveying the pre-emulsion out from the mixer unit to an emulsifier unit; and mixing, with the emulsifier unit, the pre-emulsion to thereby obtain the emulsified food product.

The introduced ingredients represent a minimum of ingredients that are required to obtained an emulsified food product. Other ingredients such as salt, sugars and different spices are generally introduces as well. If particles that should not be macerated/ mixed into a paste should be included in the emulsified food product, they are advantageously introduced after the mixing with the emulsifier unit, into the emulsified food product to thereby form an emulsified food product that contains food particles. Examples of such food particles are pieces of meat, vegetables, pasta, rice, beans, peas and other grains.

The oil may be any known combination of fat and/or oil derived from animals and/or plants and which is suitable for forming an ingredient in food for humans, such as olive oil, sun flower oil, rapeseed oil, animal fat, any other oil or fat that is derived from vegetables, plants, seeds or animals, or a mixture of such oils and fats. The water may be pure water or may be any mixture of water and other ingredients that are soluble or present in the water. The emulsifier may be egg protein in any form (liquid or dry), milk protein in any form and substances like polysorbate 20 and polysorbate 80. The amounts of the different ingredients are selected according to known recipes that results in, when the ingredients are properly mixed, an emulsified food product.

Mixing into the pre-emulsion means that mixing is performed until an emulsion is formed. However, the pre-emulsion is coarser than the emulsified food product and does not yet have the desired texture and appearance, hence being referred to as a "pre-emulsion". Mixing to obtain the emulsified food product means that the desired texture and appearance is obtained for the product. The emulsified food product is finer, i.e. have a smaller average droplet size than the pre-emulsion.

The method is advantageous in particular in that only one pair of mixer unit and emulsification unit may be used for producing different kinds of emulsified food products. Another advantage with the method is that the emulsification (average droplet size) of the emulsified food product may be easily adjusted by controlling the emulsification unit.

According to a second aspect a mixing unit, an emulsifier unit and a control unit that are provided, which are operable to perform the method for producing an emulsified food product according to the first aspect.

Other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of a mixer unit and emulsification unit for producing an emulsified food product, and
Fig. 2 is a flow chart of a method of producing an emulsified food product.

### Detailed Description

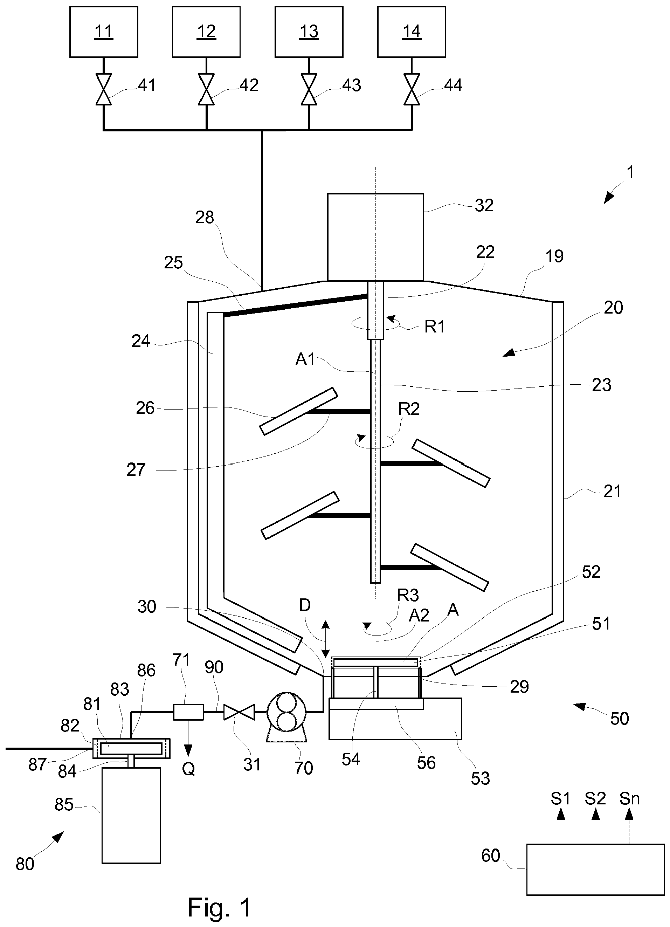

With reference to Fig. 1 a mixer unit 1 is illustrated. The mixer unit 1 comprises a tank 19 that has an inlet 28 for receiving various ingredients, such as oil 13 derived from animals or plants, a water based ingredient 11, an emulsifier ingredient 12 and any other ingredient 14 such as species and stabilizer ingredients that should, when properly mixed, form the emulsified food product. The emulsified food product may comprise any of mayonnaise, soup, sauce and dressing as well any other food product that comprises an oil-in-water emulsion. A number of sources that hold the ingredients that shall form the emulsified food product are connected to the inlet 28 via valves 41-44 that control the supply of the ingredients through the inlet 28 and into the tank 19. The mixer unit 1 has at its bottom 29 an outlet 30 through which mixed ingredients may leave the tank 19. When producing an emulsified food product, mixed ingredients that leave the tank 19 have typically been mixed by the mixer unit 1 to form a pre-emulsion. "pre-emulsion" means that further emulsification is needed in order to obtain the emulsified food product.

To facilitate introducing ingredients into the mixer unit 1, the mixer unit 1 may comprise a pressure arrangement (not shown) that inside the tank 19 creates a pressure that is lower than a pressure of the atmosphere surrounding the tank 19. The pressure arrangement may then suck in the ingredients 11-14 into the mixer unit 1. Alternatively, pumps (not shown) are used for pumping the ingredients 11-14 into the mixer unit 1.

A flow line 90 is connected to the outlet 30 for conveying the ingredients 11-14, when mixed into a pre-emulsion, out from the mixer unit 1. The flow line 90 may have the form of a pipe and may comprise a pump 70 for effectively pumping out pre-emulsion from the mixer unit 1. Alternatively, the pressure arrangement described above may inside the tank 19 create a pressure that is higher than a pressure of the atmosphere surrounding the tank 19, such that pre-emulsion may be pushed out from the mixer unit 1. The pump 70 have the form of any conventional pump that is capable of pumping a pre-emulsion out from the mixer unit 1. Examples of such pump includes pumps sold by Jung Process Systems under the name HYGHSPIN. The pump 70 is advantageously driven with a motor that includes a variable-frequency drive, such that the speed (pump capacity) and the torque of the pump 70 may be controlled.

A cooling jacket 21 surrounds a periphery of the tank 19 and has an inlet respectively an outlet (not shown) for allowing a cooling media to flow through the cooling jacket 21 to thereby reduce alternately to maintain a temperature of ingredients that are present inside the tank 19.

A double shaft agitator 20 is located inside the mixer unit 1 and has a double shaft axle 22, 23 that is suspended from the top of the tank 19. The double shaft axle has a first axle 22 that encloses an upper part of a second axle 23, and the two axles 22, 23 are driven to rotate in same or different directions R1, R2 by a motor unit 32 that is arranged at the top of the mixer unit 1. The two axles 22, 23 extend along and are rotatable about a first rotational axis A1 of the mixer unit 1.

A fist blade 24 is via an arm 25 connected to the first axle 22 so that the first blade 24 rotates in the same direction R1 as the first axle 22 when driven by the motor unit 32. The first blade 24 may be a scraper blade that rotates close to an inner wall of the tank 19, so that ingredients that stick to the inner tank wall may be scraped off.

A second blade 26 is via an arm 27 connected to the second axle 23 so that the second blade 26 rotates in the same direction R2 as the second axle 23 when driven by the motor unit 32. The second blade 26 may be a fluid lifting blade in the sense that it is arranged to make ingredients in contact with the second blade 26 flow upward from the bottom 29 of the tank 19, in a direction towards the top of the tank 19, when the second axle 23 is driven by the motor unit 32. Any suitable numbers of fluid lifting blades like the second blade 26 may be connected to the second axle 23, such as four blades, as shown in the illustrated example.

A rotor 51 is arranged at the bottom 29 of the tank 19. The rotor 51 is via an axle 54 connected to a rotor engine 53 that, when activated, drives the axle 54 so that the rotor 51 rotates in a rotational direction R3. The axle 54 of the rotor 51 extends along and is rotatable about a second rotational axis A2 of the mixer unit 1. The two axes A1 and A2 are preferably aligned with each other. A stator 52 is arranged around the radial periphery of the rotor 51. An actuator 56 is arranged to move the stator 52 in a direction D that is parallel to the axis of rotation A2 of the rotor 51. The actuator 56 can set the stator 52 in a lowermost position where it surrounds the radial periphery (circumference) of the rotor 51. The stator 52 can, by the actuator 56, be moved to an uppermost position where it is lifted such that it does not surround the radial periphery of the rotor 51. The stator 52 has openings or slots where it surrounds the circumference of the rotor 51, thereby allowing ingredients to be pushed through the stator 52 when the stator 52 in an a position where it surrounds all of or some of the rotor 51.

The rotor 51, the stator 52 and the actuator 56 form a rotor-stator arrangement 50 that allows a shear that ingredients are subjected to, by the rotor 51 and the stator 52, to be varied when the rotor 51 rotates. In detail, when the stator 52 is in its lowermost position (closest to the bottom 29 of the tank 19), ingredients inside the tank 19 are by the rotation of the rotor 51 drawn towards the upper side of the rotor 51. The ingredients are then forced outwards in a radial direction of the rotor 51, through the holes in the stator 52 that surround the circumference of the rotor 51.

When the stator 52 is in its uppermost position (farthest away from the bottom 29 of the tank 19), ingredients inside the tank 19 are by the rotation of the rotor 51 drawn towards the upper side of the rotor 51. The ingredients are still forced outwards in a radial direction of the rotor 51, but without passing through the holes in the stator 52 since the stator 52 does not surround the circumference of the rotor 51. The stator 52 can be positioned at any location between its lowermost position and its uppermost position, which will vary the amount of ingredients that pass through the stator 52. The more ingredients that pass though the stator 52 the higher the shear will be. Thus, due to the actuator 56 and the movable stator 52 it is possible to vary a shear that is provided by the rotor 51 and the stator 52 during mixing of any ingredient inside the mixer unit 1. In addition, the shear may also be varied by changing the rotational speed of the rotor 51.

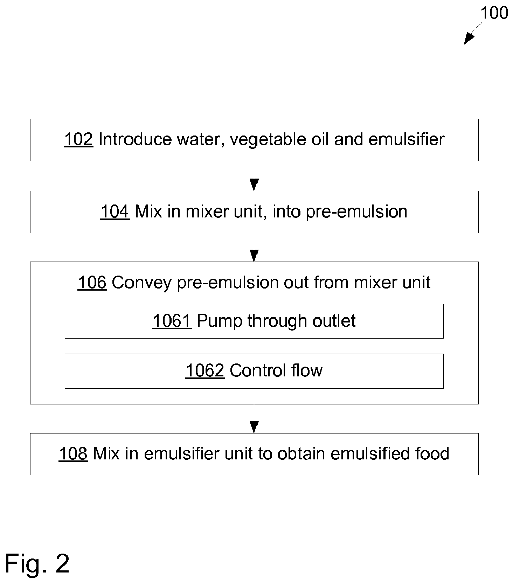

The described mixer unit 1 is one example of mixer unit that may be used for mixing ingredients into a pre-emulsion as described below in connection with Fig. 2. Another example of a mixer unit that may be used for the same purpose is the mixer unit sold by Tetra Pak® under the name "Tetra Pak® High Shear Mixer".

An emulsifier unit 80 is connected to the flow line 90, at a position downstream the pump 70. The emulsifier unit 80 has a housing 83 with an inlet 86 for receiving mixed ingredients in form of a pre-emulsion from the mixer unit 1, and has an outlet 87 that allows the received ingredients to exit the emulsifier unit 80 after having been further mixed (emulsified). Inside the housing 83 a rotor 81 and a stator 82 are arranged to accomplish efficient mixing of any ingredient that is pumped through the emulsifier unit 80. The mixing by the emulsifier unit 80 is accomplished by driving the rotor 81 so that it rotates inside the housing to push pre-emulsion through openings or slots of the stator 82. The rotor 81 is via an axle 84 connector to a motor 85 that drives the axle 84 to rotate, which in turn makes the rotor 81 rotate inside the housing 83. The motor advantageously comprises a variable-frequency drive, which is an adjustable-speed drive that is capable of, by varying motor input frequency and voltage, controlling the speed of the motor 85 as well as a torque provided by the motor 85. The 80 emulsifier unit 80 can thereby control the mixing, or shear, that is applied on the pre-emulsion that enters the emulsifier unit 80.

The described emulsifier unit 80 is one example of an emulsifier unit that may be used for mixing a pre-emulsion to obtain an emulsified food product as described below in connection with Fig. 2. Other examples of emulsifier units that may be used for the same purpose is the emulsifier units sold by the company Fristam Pumpen under the name Fristam shear pump FSP and Fristam shear pump FSM. In principle the emulsifier unit 80 may have any form of a commercially available shear providing pump or shear providing mixing unit through which fluid may continuously flow while being subjected to shear. Some embodiments of the emulsifier unit 80 may include a pump functionality. In such cases the pump 70 may be omitted.

A conventional valve 31 may be arranged in the flow line 90, at a position between the mixer unit 1 and the emulsifier unit 80 to control a flow rate of pre-emulsion that is conveyed (pumped) to the emulsifier unit 80. Alternatively or additionally, the pump 70 may be arranged to control the flow rate of pre-emulsion that is conveyed to the emulsifier unit 80.

A conventional flow meter 71 may be arranged in the flow line 90, at a position between the mixer unit 1 and the emulsifier unit 80 to measure a flow rate of pre-emulsion that is conveyed to the emulsifier unit 80. A signal Q indicative of this flow rate is generated by the flow meter 71.

A control unit 60 is configured to generate signals S1, S2, Sn to control the operation of the mixer unit 1 and the emulsifier unit 80. When a pump 70 is used for conveying pre-mixture out from the mixer unit 1 the control unit 60 may be used for controlling the pump 70 as well. If a valve 31 is used for controlling the flow rate of the pre-emulsion from the mixer unit 1, then the control unit 60 may be configured to control also the valve 31. The control unit 60 receives the signal Q representing the flow rate of the pre-emulsion as measured by the flow meter 71.

Examples of controls signals include signals for opening and closing the valves 41-45 and 31, signals for controlling the rotation of any of the axles 22, 23 and 54 to thereby control agitation and shear applied on ingredients inside the mixer unit 1, signals for controlling the actuator 56, signals controlling the operation of the pump 70 and the emulsifier unit 80.

The control unit 60 may comprise a CPU (central processing unit) and an MMI (Man Machine Interface), which are configured so that the mixer unit 1 and the emulsifier unit 80 and any equipment like the pump 70, and valves 31, 41-45 may be controlled and so that information may be presented to an operator or user about the operation of the controlled units and devices. The MMI may, e.g., comprise one or more of a display, a touch screen, a mouse, a keyboard, a track pad, buttons, sliders, switches and knobs, allowing data and control instructions to be inputted by the operator.

The control unit 60 may be implemented by hardware components, or a combination of hardware components and software instructions. The software instructions may be executed by a processor in conjunction with an electronic memory in the control unit 60. The software instructions may be supplied to the control unit 60 on a computer-readable medium, which may be a tangible (non-transitory) product (e.g. magnetic medium, optical disk, read-only memory, flash memory, etc.) or a propagating signal. In one embodiment, the control unit 60 is a PLC. It should understood that the control unit 60 may also be configured to control other functions of the mixer unit 1 and the emulsifier unit 80 than those described herein. In combination, the mixer unit 1, the emulsifier unit 80 and the control unit 60 are configured to, i.e. are operable to, perform the method for producing an emulsified food product as described below. The communication between the control unit 60 and the units and devices it controls as well as the control functionality per se may implemented according to known principles and techniques.

With refence to Fig. 2 a method 100 for producing an emulsified food product is described. The method 100 may be performed by and is described in connection with the mixer unit 1 and the emulsifier unit emulsifier unit 80. The method 100 may also be performed by a Tetra Pak® High Shear Mixer and a Fristam shear pump, or by mixer and emulsifier units similar to these mixers and emulsifier units.

The method comprises introducing 102 oil 13 derived from animals or plants 13, a water based ingredient 11 and an emulsifier ingredient 12 into the tank 19 of the mixer unit 1. The oil may be any known combination of fat and/or oil derived from animals or plants (vegetables) and which is suitable for forming ingredients in food for humans, such as olive oil, sun flower oil, rapeseed oil or any other combination of fat or oil that is derived from plants or animals. The water ingredient may be pure water, or may be any mixture of water and other ingredients that are soluble or present in the water. The oil and the water ingredient are immiscible. The emulsifier ingredient is any substance that is suitable as an ingredient in food for humans, and which is capable of stabilizing an emulsion by increasing its kinetic stability. Examples of such emulsifier ingredients are egg and milk proteins in any form, and substances like polysorbate 20 and polysorbate 80. Species and other ingredients may also be introduced.

The amounts of the different ingredients are selected according to known recipes that result in, when the ingredients are properly mixed, an emulsified food product. The introduction 102 is accomplished by, for example, pumping in the ingredients into the mixer unit 1, or by creating under-pressure in the mixer unit 1 so that the ingredients enter the tank 19.

The introduced ingredients are mixed 104 into a pre-emulsion by running the mixer unit 1 so that the rotor 51 rotates. The mixing 104 comprising operating the actuator 56 to set the stator 52 in a position so that a desired shear is provided by the rotor 51 and the stator 52 during the mixing 104 in the mixer unit 1. The mixing 104 may include rotating the rotor 51 of the mixer unit 1 so that a tangential speed of the rotor 51 is within a range of 16-24 m/s.

Preferably, during the mixing 104 the double shaft agitator 20 circulates a volume of fluid (ingredients or pre-emulsion) inside the tank 19. The circulated volume is 70-130% of a volume of fluid that passes through a peripheral area A that surrounds the rotor 52 of the mixer unit 1, to thereby ensure that local circulation of fluid around the rotor 52 is avoided. The peripheral area A may be defined as the circumference of the rotor 51 multiplied with the average height of the rotor 51. The area A has the same center as the rotor 51.

When the ingredients have been mixed 104 into the pre-emulsion the pre-emulsion is conveyed 106 out from the mixer unit 1, through the flow line 90 and to the emulsifier unit 80. This may be accomplished pumping 1061 the pre-emulsion through the outlet 30, by running the pump 70, or by running the emulsifier unit 80 in case it includes a pumping functionality.

The conveyed pre-emulsion is mixed 108 in the emulsifier unit 80. The mixing 108 means that the pre-emulsion is further emulsified, such that the emulsified food product is obtained from the pre-emulsion. The conveying 106 comprises, during the mixing 108, conveying a continuous flow of the pre-emulsion to the emulsifier unit 80. As a result, the mixing 108 with the emulsifier unit 80 is performed on a continuous flow of pre-emulsion, and the obtained emulsified food product comes out from the emulsifier unit 80 as a continuous flow of emulsified food product.

The conveying 106 may comprises controlling 1062 a flow rate of the pre-emulsion that is conveyed to the emulsifier unit 80, to thereby subject the pre-emulsion to a predetermined shear in the emulsifier unit 80 during the mixing 108. The control 1062 of the pre-emulsion flow rate may be accomplished e.g. by adjusting the pump rate of the pump 70 until the flow meter 71 measures a flow rate Q that is known to provide the predetermined shear. The correlation between the flow rate of the pre-emulsion and the shear that is applied by the emulsifier unit 80 as a function of the pre-emulsion flow rate may be empirically determined for each combination of ingredients that form a pre-emulsion.

The mixing 108 with the emulsifier unit 80 may comprise rotating the emulsifier units rotor 81 so that a tangential speed of the rotor 81 is any of: at least 20 meter per seconds (m/s), within a range of 20-40 m/s, and within a range of 20-30 m/s. Such tangential speeds have shown suitable when mixing a pre-emulsion into an emulsified food product. The difference between the pre-emulsion and the emulsified food product is that the pre-emulsion is coarser than the emulsified food product, i.e. it has an average droplet size of the oil that is larger than that of the emulsified food product. For example, the mixing 104 in the mixer unit 1 may be performed so that the average droplet size of the vegetable oil in the pre-emulsion is 5 - 15 micron (1×10⁻⁶ of a meter). The mixing 108 with the mixer unit 1 may be performed so that the average droplet size of the vegetable oil in the emulsified food product is 2 - 5 micron. Thus, pre-emulsion may be defined as a mixture of ingredients that has an average oil droplet size of 5 - 15 micron. Emulsified food product may be defined as a mixture of the same ingredients but having an average oil droplet size that is smaller than the average oil droplet size of the pre-emulsion, such as average oil droplet size of 3 - 5 micron (but not overlapping the droplet size of the pre-emulsion). An "average droplet size" may be defined as the mean or average diameter of a drops of the oil in the emulsified food product.

The introduction 102 may include introducing a stabilizer ingredient into the mixer unit 1. The introduction of the stabilizer ingredient may be done prior the mixing 104. The stabilizer ingredient may be introduced into the mixer unit in its dry form, i.e. without premixing the stabilizer ingredient with a liquid before it is introduced into the mixer unit 1. Examples of stabilizer ingredients include modified starches combined with hydrocolloids such as xanthan gum, guar gum or locust bean gum. Stabilizer ingredient is used in particular when there is a need for water binding ingredients to create a desired viscosity and texture of the emulsified food product.

During the mixing 104 the temperature of the ingredients inside the mixer unit 1 may be maintained within a temperature interval of 6-16 °C. This is accomplished by supplying cool water through the cooling jacket 21, with a flow rate and a temperature that enables the maintenance of the temperature. Preferably, all ingredients that are introduced into the mixer unit 1 have, at the time of their respective introduction, a temperature within the same temperature interval of 6-16 °C.

The steps of introducing 102 ingredients into the mixer unit 1, mixing 104 in the mixer unit 1, conveying 106 the pre-emulsion out from the mixer unit 1 and mixing 108 with the emulsifier unit 80 may be performed in parallel. When this is done continuous production of the emulsified food product is obtained. Alternatively the method 100 is performed to accomplish batch wise production of emulsified food product. The steps of introducing 102 ingredients and mixing 104 in the mixer unit 1 are then completed before the step of conveying 106 and the step of mixing 108 with the emulsifier unit 80 are initiated. However, in both cases the conveying 106 and the mixing 108 with the emulsifier unit 80 are performed in parallel, such that the emulsifier unit 80 mixes a continues flow of pre-emulsion.

The ingredients are subjected to shear during the both the mixing 104 in the mixer unit 1 and the mixing 108 with the emulsifier unit 80. The amount of shear that is applied during the mixing 104, 108 may be determined by using conventional principles for determining shear stress in non-Newtonian fluids. The more intense the mixing is, the higher the shear will be. Exactly which mixing intensity, or shear that shall be applied by the mixer unit 1 respectively by the emulsifier unit 80 may be empirically determined based on the specific selection and amount of ingredients that form the emulsified food product. The mixing times, speeds and any stator position may be efficiently adapted so that a number of different emulsified food product types may be produced by the combination of the mixer unit 1 and the emulsifier unit 80.

From the description above follows that, although various embodiments of the invention have been described and shown, the invention is not restricted thereto, but may also be embodied in other ways within the scope of the subject-matter defined in the following claims.

## Claims

1. A method for producing an emulsified food product, the method comprising
introducing (102) oil (13) derived from animals or plants, a water based ingredient (11) and an emulsifier ingredient (12) into a tank (19) of a mixer unit (1),
mixing (104), in the mixer unit (1), the oil (13), the water based ingredient (11) and the emulsifier ingredient (12) into a pre-emulsion,
conveying (106) the pre-emulsion out from the mixer unit (1) to an emulsifier unit (80), and
mixing (108), with the emulsifier unit (80), the pre-emulsion to thereby obtain the emulsified food product.

2. The method according to claim 1, wherein
the conveying (106) comprises conveying a continuous flow of the pre-emulsion to the emulsifier unit (80), and
the mixing (108) with the emulsifier unit (80) comprises mixing the pre-emulsion that is received as a continuous flow, to thereby obtain the emulsified food product as a continuous flow of emulsified food product from the emulsifier unit (80).

3. The method according to claim 1 or 2, wherein the conveying (106) comprises controlling (1062) a flow rate of the pre-emulsion that is conveyed to the emulsifier unit (80), to thereby subject the pre-emulsion to a predetermined shear in the emulsifier unit (80).

4. The method according to any one of claims 1 - 3, wherein
a pump (70) and a flow meter (71) are arranged in a flow line (90) that connects the emulsifier unit (80) to the mixing unit (1), at a location between the emulsifier unit (80) and the mixing unit (1),
the pump (70) is configured to convey the pre-emulsion to the emulsifier unit (80), and
the flow meter (71) is configured to measure a flow rate of the pre-emulsion that is conveyed to the emulsifier unit (80).

5. The method according to any one of claims 1 - 4, wherein the mixing (104) in the mixer unit (1) is performed so that an average droplet size of the vegetable oil in the pre-emulsion is 5 - 15 micron.

6. The method according to any one of claims 1 - 5, wherein the mixing (108) with the mixer unit (1) is performed so that an average droplet size of the vegetable oil in the emulsified food product is 2 - 5 micron.

7. The method according to any one of claims 1 - 6, wherein the emulsifier unit (80) comprises a rotor (81) and a stator (82) for effecting the mixing (108) of the pre-emulsion into the emulsified food product.

8. The method according to claim 7, wherein the mixing (108) with the emulsifier unit (80) comprises rotating the rotor (81) of the emulsifier unit (80) so that a tangential speed of the rotor (81) of the emulsifier unit (80) is any of:
at least 20 m/s,
within a range of 20-40 m/s, and
within a range of 20-30 m/s.

9. The method according to any one of claims 1 - 8, wherein the mixer unit (1) comprises a tank (19), and a rotor (51) and a stator (52) that are arranged at a bottom (29) of the tank (19) to provide the mixing (104, 108, 112).

10. The method according to claim 9, wherein the mixer unit (1) comprises an actuator (53) for moving the stator (52) in a direction (D) that is parallel to an axis of rotation (A2) of the rotor (51) to thereby vary a shear that is provided by the rotor (51) and the stator (52) during the mixing (104) in the mixer unit (1).

11. The method according to claim 9 or 10, wherein the mixing (104) in the mixing unit (1) comprises rotating the rotor (51) of the mixer unit (1) so that a tangential speed of the rotor (51) of the mixer unit (1) is within a range of 16-24 m/s.

12. The method according to any one of claims 9 - 11, wherein the mixer unit (1) comprises a double shaft agitator (20) that is arranged to circulate a volume of fluid inside the tank (19) that is 70-130% of a volume of fluid that passes through a peripheral area (A) that surrounds the rotor (52) of the mixer unit (1), to thereby avoid local circulation of fluid around the rotor (52).

13. The method according to any one of claims 1 - 12, wherein the steps of introducing (102) ingredients into the mixer unit (1), mixing (104) in the mixer unit (1), conveying (106) the pre-emulsion out from the mixer unit (1) and mixing (108) with the emulsifier unit (80) are performed in parallel, so that continuous production of the emulsified food product is obtained.

14. The method according to any one of claims 1 - 13, wherein the emulsified food product comprises any of mayonnaise, soup, sauce and dressing.

15. A mixing unit (1), an emulsifier unit (80) and a control unit (60) that are operable to perform the method for producing an emulsified food product according to any one of claims 1 - 14.
